# EUROPÄISCHE PATENTSCHRIFT

(11) **EP 3 450 243 B1**
(45) Veröffentlichungstag und Bekanntmachung des Hinweises auf die Patenterteilung: **25.11.2020**
(21) Anmeldenummer: 18189883.4
(22) Anmeldetag: 21.08.2018
(51) Int. Cl.: B60K 37/06, H01H 13/52

(54) **VORRICHTUNG ZUR MECHANISCHEN BETÄTIGUNG EINER ELEKTRISCHEN ODER ELEKTRONISCHEN EINGABEEINHEIT**
DEVICE FOR MECHANICAL CONTROL OF AN ELECTRIC OR ELECTRONIC INPUT UNIT
DISPOSITIF D'ACTIONNEMENT MÉCANIQUE D'UNE UNITÉ D'ENTRÉE ÉLECTRIQUE OU ÉLECTRONIQUE

(30) Priorität: 05.09.2017 DE 102017120411
(43) Veröffentlichungstag der Anmeldung: 06.03.2019
(73) Patentinhaber: Marquardt GmbH, 78604 Rietheim-Weilheim (DE)
(72) Erfinder: Klaiber, Christof, 78054 Villingen-Schwenningen (DE); Huber, Matthias, 78187 Gutmadingen (DE); Kramer, Markus, 78549 Spaichingen (DE)
(74) Vertreter: Jostarndt Patentanwalts-AG

(56) Entgegenhaltungen:
- WO-A1-2017/001033
- DE-A1-102015 008 573
- JP-U- S59 154 738

## Beschreibung

Die Erfindung betrifft eine Vorrichtung zur mechanischen Betätigung einer elektrischen oder elektronischen Eingabeeinheit nach dem Oberbegriff des Anspruchs 1.

In vielen handelsüblichen Eingabeeinheiten, insbesondere in Mittelkonsoleneinheiten von Kraftfahrzeugen sind Eingabeeinheiten im Einsatz, die durch Drücken mit minimalem Betätigungsweg zu betätigen sind. Hierbei stellt sich das Problem, eine Haptik zu erzeugen, die eine zuverlässige Eingabe mit guter Rückmeldung an den Bediener bewirkt.

Oftmals sind zusätzliche drehbar gelagerte Drehelemente im Einsatz, wobei durch Drehen des Drehelementes eine Datenauswahl in einem Display für eine Bedienperson ermöglicht wird. Dies ist häufig in Verbindung mit zentralen Multimediaeinheiten der Fall, wobei über derartige Eingabeelemente beispielsweise das Navigationsgerät, das Radiogerät, das Telefongerät, usw. zu bedienen sind. Nach Auswahl eines bestimmten Eingabedatums, beispielsweise eines Buchstabens, einer Zahl oder aber auch eines Menüinhaltes, kann diese Eingabe durch Bestätigung vollzogen werden.

In dem o.a. genannten Fall wird gegebenenfalls auch die unmittelbare Umgebung des Drehelementes als Eingabefläche verwendet, so dass die o.a. Haptik auch für eine solche Umgebungsfläche gewünscht wird.

Derartige Betätigungsvorrichtungen sind in den Druckschriften JP S59 154738 U, DE 10 2015 008573 A1 und WO 2017/001033 A1 offenbart.

Aufgabe der Erfindung ist es, die Druckbetätigung einer solchen Bedienfläche mit einer Rückstellung bei kleinstem Betätigungsweg und verbesserter Haptik zu ermöglichen.

Diese Aufgabe wird ausgehend von einer Vorrichtung gemäß dem Oberbegriff der Ansprüche 1 und 6 durch deren kennzeichnende Merkmale gelöst.

Dementsprechend zeichnet sich eine erfindungsgemäße Vorrichtung der einleitend genannten Art dadurch aus, dass ein Anschlagelement vorgesehen ist, das durch Positionierung und Fixierung am Basiselement im Zuge der Montage den Bewegungsweg des Tastelementes auf ein vorbestimmtes Spaltmaß begrenzt.

Auf diese Weise sind Spaltmaße auf ein vorgegebenes Maß einstellbar, das im Herstellungsprozess der Bauteile mittels der Bauteiltoleranzen nicht erreichbar ist. Um das Spaltmaß auf einen minimalen Spalt mit vertretbarem Aufwand präzise einzuhalten, schlägt die Erfindung daher gewissermaßen den Toleranzausgleich in der Fertigungstoleranz der Bauteile dadurch vor, dass die gewünschte Genauigkeit des Spaltmaßes während der Montage eingestellt wird.

Die Positionierung kann dabei beispielsweise über eine exakte arbeitende Montagevorrichtung, wie einen Montageroboter oder dergleichen vorgenommen werden. Auch die Verwendung einer Maßlehre, um fügetechnisch ein genaues Spaltmaß zu erzeugen, ist erfindungsgemäß denkbar. Nach der Positionierung des Anschlagelementes kann dieses durch ein Fixierelement, das am Anschlagelement und/oder am Basisteil fixiert wird, dauerhaft eingestellt werden.

Weiterhin umgibt das Betätigungselement das Anschlagelement und ein Rückstellelement, das eine Spiralfeder ist. Außerdem ist eine Verlängerungshülse zur Übertragung der Federkraft im Anschluss an die Spiralfeder in einem Zwischenraum zwischen dem Anschlagelement und dem Betätigungselement angeordnet.

In einer besonderen Ausführungsform der Erfindung wird das Anschlagelement als Zugelement ausgebildet, das mit einem gegenüber dem Basiselement ortsfesten Anschlag und mit einem auf einen Betätigungsstößel wirkenden Anschlag versehen ist. Ein derart ausgebildetes Anschlagelement kann über die beiden Anschläge als Wegbegrenzung für den Betätigungsweg eingesetzt werden. Diese Wegbegrenzung wird, wie bereits oben erwähnt, durch Positionierung und Fixierung des Fixierelementes am Anschlagelement präziser ausgebildet, als die einzelnen Bauteile aufgrund der Fertigungstoleranz gefertigt sind.

In einer Weiterbildung dieser Ausführungsform wird der Betätigungsstößel so ausgebildet, dass er das Anschlagelement und ein Rückstellelement umgibt. Diese Bauform ermöglicht eine kompakt mechanische Einheit bestehend aus Betätigungsstößel, Anschlagelement und Rückstellelement.

Bevorzugt wird das zurückstellen hierbei zwischen einem ortsfest zum Basiselement ausgebildeten Anschlag und einem auf den Betätigungsstößel wirkenden Anschlag eingespannt. Durch diese Vorspannung ist die Rückstellkraft auf den Betätigungsstößel ebenfalls einstellbar.

Diese Ausführung ist durch die Verwendung der Spiralfeder als Rückstellungelement besonders vorteilhaft, insbesondere dann, wenn der Betätigungsstößel einen Innenraum zur Aufnahme einer solchen Spiralfeder aufweist.

Erfindungsgemäß wird eine Verlängerungshülse zur Übertragung der Federkraft im Anschluss an die Spiralfeder vorgesehen. Erfindungsgemäß wird die Verlängerungshülse in einem Zwischenraum zwischen dem Anschlagelement und dem Betätigungselement angeordnet. Zum einen kann hierdurch eine kürzere Spiralfeder verwendet werden, zum anderen ist über die Länge der Verlängerungshülse wiederum eine Möglichkeit zur Einstellung der Vorspannung gegeben.

In einer besonders vorteilhaften Weiterbildung der Erfindung wird das Anschlagelement und/oder das Betätigungselement quer zur Betätigungsrichtung elastisch verformbar ausgebildet. Dies hat zur Folge, dass beim Drücken des Tastelementes nicht nur im Rahmen des voreingestellten Spaltmaßes eine Bewegung in Betätigungsrichtung stattfindet, sondern das zugleich das Tastelement auch in eine quer, beispielsweise orthogonal hierzu verlaufende Richtung beweglich ist. Hieraus ergibt sich eine vorteilhafte Haptik für den Benutzer. Die Rückmeldung für den Benutzer, dass die Betätigung erfolgt ist, wird durch eine solche zusätzlich quer verlaufende Beweglichkeit insbesondere bei den angestrebten minimal kurzen Betätigungswegen verbessert.

Eine erfindungsgemäße Betätigungsvorrichtung wird durch ein oder mehrere Sensoreinheiten bzw. ein oder mehrere Aktoreinheiten vervollständigt, um die Betätigung des Tastelementes elektrisch oder elektronisch zu erfassen und/oder gewünschte Ereignisse auszulösen.

Für die erfindungsgemäße Fixierung des Fixierelementes am Anschlagelement kommen verschiedene Befestigungsvarianten infrage. Das Fixierelement kann am Anschlagelement beispielsweise verschraubt, verschweißt, verklebt oder verklemmt werden.

Ein Ausführungsbeispiel der Erfindung ist in der Zeichnung dargestellt und wird anhand der Figuren nachfolgend näher erläutert.

### Im Einzelnen zeigen

Figur 1 eine Explosivdarstellung einer erfindungsgemäßen Vorrichtung in perspektivischer Ansicht,
Figur 2 einen Querschnitt durch eine weitere Ausführungsform der Erfindung,
Figuren 3A und 3B jeweils eine Ausschnittvergrößerung aus Figur zwei in verschiedenen Betätigungsstellungen und
Figuren 4A und 4B eine weitere Ausschnittvergrößerung aus Figur 2 in den Betätigungsstellungen gemäß den Figuren 3A und 3B.

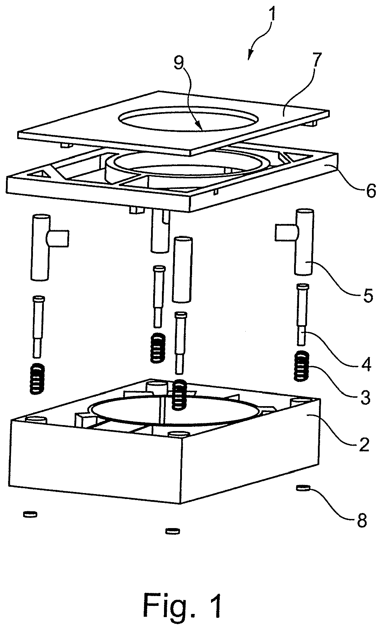

Die Vorrichtung 1 gemäß Figur 1 umfasst ein als Gehäuse ausgebildetes Basiselement 2 in Form eines Quaders. In den Ecken des Basiselementes 2 sind nicht näher dargestellte Durchlässe zur Aufnahme jeweils einer Spiralfeder 3 eines Anschlagelementes 4 sowie eine Betätigungsstößels 5 vorgesehen. Ein Führungsrahmen 6 sowie ein Tastelement 7 vervollständigen die Vorrichtung 1 zur Oberseite hin. Auf der Unterseite sind Fixierelemente 8 eingezeichnet, die während der Montage mit den Anschlagelementen 4 verbunden werden.

In Figur 1 ist eine Vorrichtung dargestellt, die zentral eine kreisrunde Aufnahme 9 für weitere Betätigungseinheiten, beispielsweise Drehelemente oder entsprechende Baueinheiten aufweist.

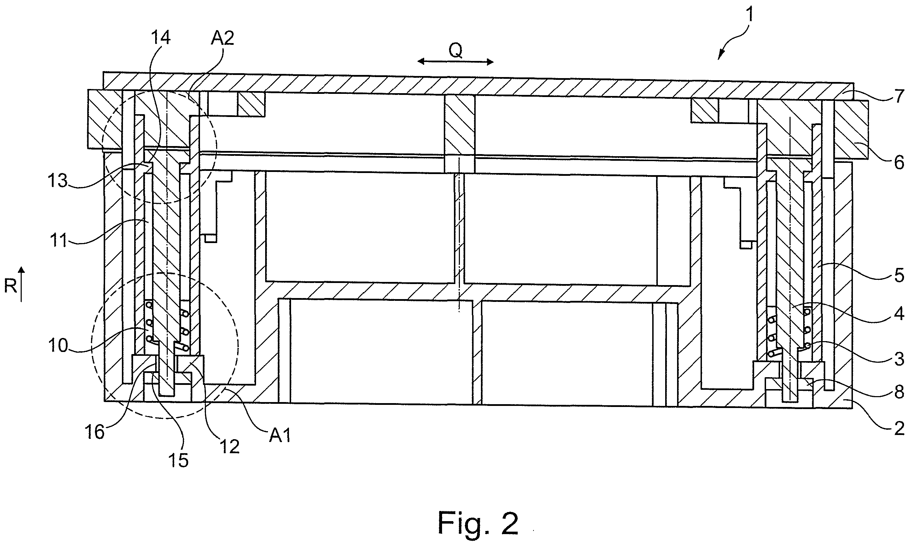

In Figur 2 ist eine geschlossene Variante einer Vorrichtung 1 dargestellt, die aber ansonsten der Vorrichtung gemäß Figur 1 entspricht.

Hier ist insbesondere erkennbar, dass im Zwischenraum 10 zwischen Betätigungsstößel 5 und Anschlagelement 4 die Spiralfeder 3 sowie eine Verlängerungshülse 11 angeordnet sind. Die Spiralfeder 3 drückt über einen Anschlag 12 am Basiselement 2 sowie die Verlängerungshülse 11 und den Betätigungsstößel 5 nach oben in Richtung des Pfeils R. Dabei wird ein ringförmiger, nach innen stehender Vorsprung 13 mit einem oberen Anschlag 14 des Anschlagelementes 4 in Anschlag gebracht.

Über die Positionierung und Fixierung des Fixierelementes 8 auf der Unterseite des Anschlagelementes 4 wird ein unterer Anschlag 15 am Anschlagelement 4 angebracht, der sich an einer äußeren Anschlagfläche 16 des Basisteils 2 abstützt.

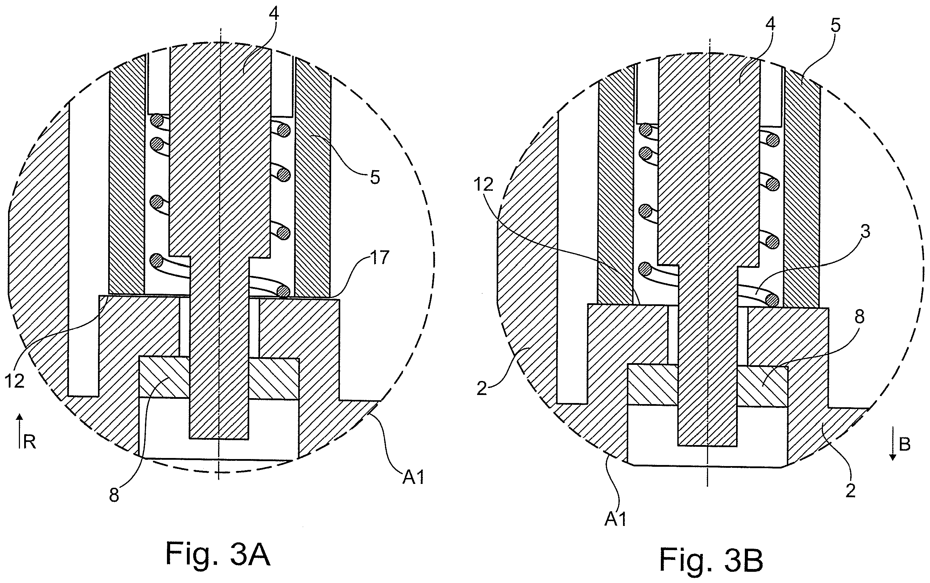

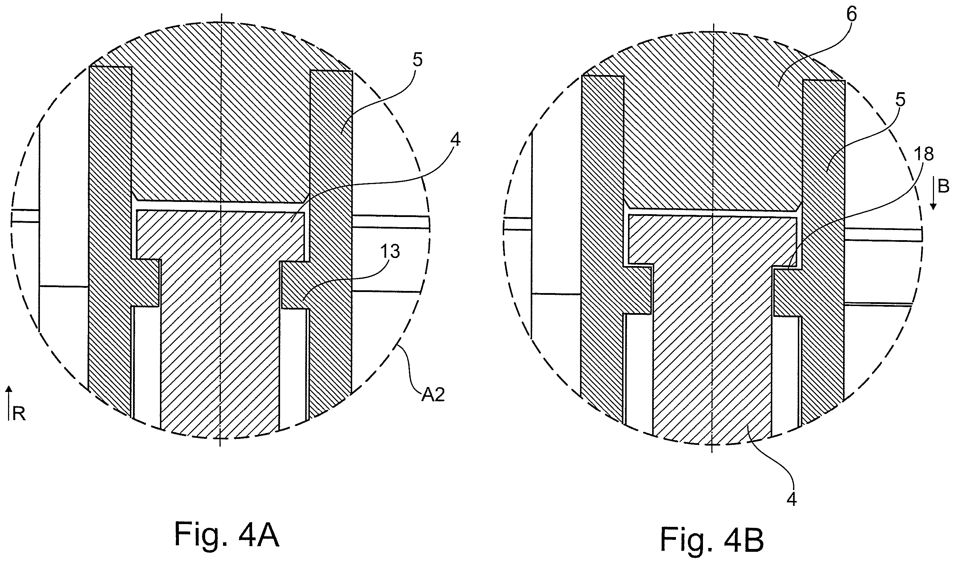

Die Ausschnitte A1 und A2 sind in den Figuren 3A, B und 4A, B vergrößert dargestellt.

Figur 3A zeigt einen unteren Bildausschnitt A1 aus Figur 2 in der unbetätigten Stellung der Vorrichtung 1. Durch die Rückstellkraft der Spiralfeder 3 ist der Betätigungsstößel 5 nach oben in Richtung R gehoben, so dass sich ein Spalt 17 zwischen dem Betätigungsstößel 5 und einer inneren Anschlagfläche 12 des Basiselementes 2 ergibt. Das Spaltmaß, d.h. die Breite dieses Spaltes ist, wird durch den Abstand der Anschläge des Anschlagelementes 4 bestimmt und ist durch exakte Positionierung des Fixierelementes 8 während der Montage mit anschließender Fixierung am Anschlagelement exakter eingestellt als dies durch die Fertigungstoleranz der beteiligten Bauelemente realisierbar wäre.

In Figur 3B ist der gleiche Bildausschnitt A1 in der betätigten Stellung dargestellt. Der Spalt 17 ist geschlossen und der Betätigungsstößel 5 liegt an der inneren Anschlagfläche 12 des Basiselementes 2 an. Da das Anschlagelement 4 gegenüber dem Betätigungsstößel beweglich ist, kann das Anschlagelement 4 in der Position gemäß Figur 3A verbleiben, so wie dies in Figur 3B dargestellt ist.

Im Bildausschnitt A2 gemäß den Figuren 4A und 4B liegt eine entsprechende Spaltbildung vor. Hier ergibt sich der Spalt 18 zwischen dem Anschlagelement 4 und dem Betätigungsstößel 5 in der betätigten Stellung gemäß Figur 4B, während dieser Spalt in der unbetätigten Stellung gemäß Figur 4A geschlossen ist.

Ergänzend zum genauen Spaltmaß durch die erfindungsgemäße Verwendung des Fixierelementes 8 beinhaltet die Erfindung noch eine weitere Verbesserung durch die elastische Ausgestaltung des Anschlagelementes 4 und/oder des Betätigungsstößels 5 in Querrichtung Q quer zur Betätigungsrichtung. Hierdurch kann das Tastelement bei Bedienung auch in Querrichtung Q bewegt werden, wodurch sich insbesondere bei sehr kleinen Betätigungswegen eine bessere Haptik im Sinne einer verbesserten Rückmeldung über die Betätigung des Tastelementes für den Benutzer ergibt.

### Bezugszeichenliste:

- 1.: Vorrichtung
- 2.: Basiselement
- 3.: Spiralfeder
- 4.: Anschlagelement
- 5.: Betätigungsstößel
- 6.: Führungsrahmen
- 7.: Tastelement
- 8.: Fixierelement
- 9.: Aufnahme
- 10.: Zwischenraum
- 11.: Verlängerungshülse
- 12.: Innere Anschlagfläche
- 13.: Vorsprung
- 14.: Anschlag
- 15.: Anschlag
- 16.: Äußere Anschlagfläche
- 17.: Spalt
- 18.: Spalt

- R: Rückstellrichtung
- B: Betätigungsrichtung
- Q: Querrichtung

- A1: Bildausschnitt
- A2: Bildausschnitt

## Patentansprüche

1. Vorrichtung (1) zur mechanischen Betätigung einer elektrischen oder elektronischen Eingabeeinheit, insbesondere für Mittelkonsoleinheiten von Kfz, wobei ein Tastelement (7) zur Betätigung einer Sensoreinheit und/oder einer Aktoreinheit in einer Betätigungsrichtung gegenüber einem Basiselement (2) gegen eine Rückstellkraft bewegbar ist, wobei ein Anschlagelement (4) vorgesehen ist, das durch Positionierung und Fixierung am Basiselement (2) im Zuge der Montage den Bewegungsweg des Tastelementes (7) auf ein vorbestimmtes Spaltmaß begrenzt, wobei ein Betätigungselement (5) das Anschlagelement (4) und ein Rückstellelement (3) umgibt und das Rückstellelement (3) eine Spiralfeder ist, **dadurch gekennzeichnet, dass** eine Verlängerungshülse (11) zur Übertragung der Federkraft im Anschluss an die Spiralfeder (3) in einem Zwischenraum (10) zwischen dem Anschlagelement (4) und dem Betätigungselement (5) angeordnet ist.

2. Vorrichtung nach Anspruch 1, **dadurch gekennzeichnet, dass** das Anschlagelement (4) als Zugelement mit einem gegenüber dem Basiselement (2) wirkenden Anschlag (15) und mit einem auf das Betätigungselement (5) wirkenden Anschlag (14) ausgebildet ist.

3. Vorrichtung nach einem der vorgenannten Ansprüche, **dadurch gekennzeichnet, dass** das Rückstellelement (3) zwischen einer ortsfest zum Basiselement ausgebildeten Anschlagfläche (12) und einem auf das Betätigungselement (5) wirkenden Anschlag (13) eingespannt ist.

4. Vorrichtung nach einem der vorgenannten Ansprüche **dadurch gekennzeichnet, dass** das Anschlagelement (4) und/oder das Betätigungselement (5) quer zur Betätigungsrichtung elastisch verformbar sind.

5. Vorrichtung nach einem der vorgenannten Ansprüche, **dadurch gekennzeichnet, dass** ein oder mehrere Sensoreinheiten und /oder ein oder mehrere Aktoreinheiten zur elektrischen oder elektronischen Erfassung der Betätigung und/oder Auslösung eines Ereignisses vorgesehen sind.

6. Verfahren zur Montage einer Vorrichtung nach einem der vorgenannten Ansprüche, **dadurch gekennzeichnet, dass** das Anschlagelement (4) oder das mit dem Anschlagelement (4) in Wirkverbindung stehende Betätigungselement (5) in einer vorbestimmten Position mit einem definierten Spaltmaß zu einem Gegenanschlag angeordnet und gehalten wird, wobei anschließend ein Fixierelement (8) mit einer Anschlagfläche zur dauerhaften Einstellung des Spaltmaßes fest mit dem Anschlagelement (4) verbunden wird.

7. Verfahren nach Anspruch 6, **dadurch gekennzeichnet, dass** das Fixierelement (8) am Anschlagelement (4) verschraubt und/oder verschweißt und/oder verklebt und/oder verklemmt wird.

## Claims

1. A device (1) for the mechanical control of an electrical or electronic input unit, in particular for central console units of motor vehicles, wherein a sensing element (7) for controlling a sensor unit and/or an actuator unit can be moved against a restoring force in an actuation direction relative to a base element (2), wherein a stop element (4) is provided, which, by being positioned and fixed on the base element (2) during assembly, limits the movement path of the sensing element (7) to a predetermined gap, wherein a control element (5) surrounds the stop element (4) and a restoring element (3) and the restoring element (3) is a coil spring, **characterised in that** an extension sleeve (11) for transmitting the spring force is arranged following the coil spring (3) in an intermediate space (10) between the stop element (4) and the control element (5).

2. The device according to claim 1, **characterised in that** the stop element (4) is formed as a tension element having a stop (15) acting relative to the base element (2) and having a stop (14) acting on the control element (5).

3. The device according to any one of the preceding claims, **characterised in that** the restoring element (3) is clamped between a stop surface (12) formed to be stationary with respect to the base element and a stop (13) acting on the control element (5).

4. The device according to any one of the preceding claims, **characterised in that** the stop element (4) and/or the control element (5) are elastically deformable transversely to the actuation direction.

5. The device according to any one of the preceding claims, **characterised in that** one or more sensor units and/or one or more actuator units are provided for electrical or electronic detection of the control and/or triggering of an event.

6. A method for assembling a device according to any one of the preceding claims, **characterised in that** the stop element (4) or the control element (5) operatively connected to the stop element (4) is arranged and held in a predetermined position having a defined gap from a counter-stop, wherein a fixing element (8) with a stop surface is then firmly connected to the stop element (4) for continuous adjustment of the gap.

7. The method according to claim 6, **characterised in that** the fixing element (8) is screwed and/or welded and/or glued and/or clamped to the stop element (4).

## Revendications

1. Dispositif (1) d'actionnement mécanique d'une unité d'entrée électrique ou électronique, en particulier pour unités de console centrale des véhicules automobiles, dans lequel un élément palpeur (7) pour actionner une unité de capteur et/ou une unité d'actionneur peut être déplacé dans une direction d'actionnement par rapport à un élément de base (2) contre une force de rappel, dans lequel un élément de butée (4) est situé, lequel, par positionnement et fixation sur l'élément de base (2) lors de l'assemblage, limite la trajectoire de déplacement de l'élément palpeur (7) à une dimension d'une fente prédéterminée, dans lequel un élément d'actionnement (5) entoure l'élément de butée (4) et un élément de rappel (3) et l'élément de rappel (3) est un ressort en spirale, **caractérisé en ce qu'**un manchon d'extension (11), pour transmettre la force de ressort suivant le ressort en spirale (3), est agencé dans un espace intermédiaire (10) entre l'élément de butée (4) et l'élément d'actionnement (5).

2. Dispositif selon la revendication 1, **caractérisé en ce que** l'élément de butée (4) en tant qu'élément de traction est formé à l'aide d'une butée (15) agissant contre l'élément de base (2) et à l'aide d'une butée (14) agissant sur l'élément d'actionnement (5).

3. Dispositif selon l'une quelconque des revendications précédentes, **caractérisé en ce que** l'élément de rappel (3) est serré entre une surface de butée (12) fixée à l'élément de base et une butée (13) agissant sur l'élément d'actionnement (5).

4. Dispositif selon l'une quelconque des revendications précédentes, **caractérisé en ce que** l'élément de butée (4) et/ou l'élément d'actionnement (5) sont déformables de manière élastique transversalement à la direction d'actionnement.

5. Dispositif selon l'une quelconque des revendications précédentes, **caractérisé en ce qu'**au moins une unité de capteur et/ou au moins une unité d'actionnement sont situées pour détecter de manière électrique ou électronique l'actionnement et/ou le déclenchement d'un événement.

6. Procédé de montage d'un dispositif selon l'une quelconque des revendications précédentes, **caractérisé en ce que** l'élément de butée (4) ou l'élément d'actionnement (5) étant en liaison fonctionnelle avec l'élément de butée (4) est disposé et maintenu dans une position prédéterminée à une dimension d'une fente définie par rapport à une contre-butée, dans lequel un élément de fixation (8) comportant une surface de butée, pour un réglage permanent de la 'dimension d'une fente, est ensuite raccordé de manière fixe à l'élément de butée (4).

7. Procédé selon la revendication 6, **caractérisé en ce que** l'élément de fixation (8) est vissé et/ou soudé et/ou collé et/ou serré sur l'élément de butée (4).
